# EUROPEAN PATENT SPECIFICATION

(11) **EP 2 581 166 B1**
(45) Date of publication and mention of the grant of the patent: **17.09.2014**
(21) Application number: 12188354.0
(22) Date of filing: 12.10.2012
(51) Int. Cl.: B23Q 9/00

(54) **Guide devices for power tools**
Schienenvorrichtungen für Elektrowerkzeuge
Dispositifs de guidage pour outils électriques

(30) Priority: 13.10.2011 JP 2011226033
(43) Date of publication of application: 17.04.2013
(73) Proprietor: Makita Corporation, Anjo, Aichi 446-8502 (JP)
(72) Inventor: Wada, Yuki, Anjo,, Aichi 446-8502 (JP); Inayoshi, Hirotomo, Anjo,, Aichi 446-8502 (JP)
(74) Representative: Kramer - Barske - Schmidtchen

(56) References cited:
- DE-A1- 3 644 926
- US-A1- 2005 061 128

## Description

This application claims priority to Japanese patent application serial number 2011-226033, the contents of which are incorporated herein by reference.

The present invention relate to guide devices used for guiding power tools relative to workpieces:

US 2005/0061128 A1 discloses a saw guide apparatus.

The hand-held power tools, such as portable circular saws and jigsaws, may be used for performing processing operations, such as cutting operations. During the processing operations, the user may hold the power tool with his or her hand and move the power tool relative to a workpiece. It has been known to use an elongated ruler plate when a workpiece is cut by a portable circular saw along a straight line by a relatively long distance. The portable circular saw may include a base for placing on the workpiece, and a tool unit supported on the upper surface of the base. JP-A-2006-334886 teaches a technique relating to this kind of ruler plate. According to the technique disclosed in this document, a guide projection is formed on the upper surface of a ruler plate. The guide projection extends in a longitudinal direction of the ruler plate. On the other hand, a guide groove is formed in the lower surface of a base of a portable circular saw. The guide groove extends in a cut proceeding direction. The portable circular saw may be placed on the ruler plate such that the guide projection of the base engages the guide groove of the ruler plate. In this way, the portable circular saw can be moved accurately along a straight line by a long distance, so that it is possible to accurately cut the workpiece.

However, in the case of the technique disclosed in JP-A-2006-334886, the distance between the guide groove of the base and a cutting blade of the tool unit is fixed to a given value. Therefore, the position of the cutting blade is fixed relative to the ruler plate. For this reason, the ruler plate cannot be used for different portable circular saws that have different specifications or sizes.

In order to solve this problem, JP-A-11-300702 has proposed a guide device including an elongated ruler plate and an adapter. The adapter can support a power tool, such as a portable circular saw or a router, against the ruler plate. By using the guide device, the power tool can be moved accurately along a straight line by a long distance for performing a processing operation, such as a cutting operation, of a workpiece. In addition, it is possible to change the position of the adapter relative to the power tool in order to change the position of the power tool relative to the ruler plate. In this way, the guide device can be used for different power tools having different specifications or sizes. DE3612214 also teaches a guide device similar to that of JP-A-11-300702.

However, the above guide device configured to set the power tool on the ruler plate via the adapter still has a problem. In the case of the adapter of JP-A-11-300702 or DE3612214, the adapter includes two connection members spaced from each other in the forward and rearward direction along the cut proceeding direction. The two connection members may be fixedly attached to a base of a power tool having an attaching portion for attaching the connection members. In this way, the adapter can be attached to the power tool. However, the adapter cannot be attached to the other power tools having attaching portions that are not compatible with the connection members of the adapter. In such a case, the ruler plate cannot be used.

Therefore, there has been a need in the art for a guide device that enables a ruler plate to be used for different power tools that have specifications or sizes.

In one aspect according to the present teachings, a guide device may include a ruler plate capable of being fixed in position relative to the workpiece, an adapter base capable of supporting the power tool and movable in a process proceeding direction relative to the ruler plate, and a plurality of connection members for connecting the adapter base to the power tool. In this specification, the term "process proceeding direction" is used to mean a direction, along which the power tool is moved for performing a processing operation, such as a cutting operation. The connection members may include a front connection member and a rear connection member positioned on a rear side of the front connection member with respect to the process proceeding direction. A distance between the front connection member and the rear connection member can be changed.

Additional objects, features, and advantages, of the present invention will be readily understood after reading the following detailed description together with the claims and the accompanying drawings, in which:
FIG 1 is a plan view of a portable circular saw, as an example of a power tool, which can be used in combination of a guide device according to a representative embodiment;
FIG. 2 is a perspective view of the portable circular saw as viewed from a rear side with respect to a cut proceeding direction;
FIG. 3 is a plan view of a ruler plate of the guide device;
FIG. 4 is a sectional view of the ruler plate taken along line (IV)-(IV) in FIG. 3;
FIG. 5 is a plan view of an adapter base of the guide device;
FIG. 6 is a right side view of the adapter base as viewed in a direction indicated by arrow (VI) in FIG. 5;
FIG. 7 is a sectional view taken along line (VII)-(VII) in FIG. 5 showing first, second and third attaching portions;
FIG. 8 is a plan view of a reference connection member;
FIG. 9 is a rear view of the reference connection member;
FIG. 10 is a plan view of the guide device in the state where the circular saw schematically shown by two-dot chain lines is connected to the guide device;
FIG. 11 is a sectional view taken along line (XI)-(XI) in FIG. 10 showing a fall preventing device of the adapter base;
FIG. 12 is a sectional view taken along line (XII)-(XII) in FIG. 10 showing the first attaching portion of the adapter base;
FIG. 13 is a sectional view taken along line (XIII)-(XIII) in FIG. 10 showing a shifting movement preventing device;
FIG. 14 is a plan view of an auxiliary connection member with indication of a first attaching orientation;
FIG. 15 is a rear view of the auxiliary connection member as viewed from a direction indicated by arrow (XV) in FIG. 14;
FIG. 16 is a plan view of the auxiliary connection member with indication of a second attaching orientation reversed with respect to the longitudinal direction from the first attaching orientation; and
FIG. 17 is a plan view of the guide device showing a jigsaw connected to the left side of the adapter base opposite to the right side where the portable circular saw is connected.

Various examples will now be described with reference to the drawings.

In one example, a guide device may be used for guiding a power tool such that the power tool can move along a substantially straight line in a process proceeding direction relative to a workpiece. For example, the power tool may be a cutting tool, such as a portable circular saw or a jigsaw. The guide device may include a ruler plate capable of being fixed in position relative to the workpiece, an adapter base capable of supporting the power tool and movable in the process proceeding direction relative to the ruler plate, and a plurality of connection members for connecting the adapter base to the power tool. The plurality of connection members may include a front connection member and a rear connection member positioned on a rear side of the front connection member with respect to the process proceeding direction. A distance changing device can change the distance between the front connection member and the rear connection member.

With this arrangement, because the distance between the front connection member and the rear connection member can be changed, the guide device can be used for different types of power tools that may be different in distance between attaching portions, to which the front and rear connection members can be attached. Therefore, the guide device can be broadly used for different types of power tools. The distance changing device may include a plurality of attaching portions provided at the adapter base. For example, the distance changing device may include at least three attaching portions spaced from each other in the process proceeding direction. The front connection member and the rear connection member may be attached to any two of the at least three attaching portions. Alternatively, the distance changing means may be a movable support device that can support at least one of the front and rear connection members and is movable relative to the adapter base.

The position of at least one of the front connection member and the rear connection member relative to the adapter base can be changed in the process proceeding direction and/or a direction substantially perpendicular to the process proceeding direction. Therefore, it is possible to change the position of the power tool relative to the adapter base. By changing the position of the power tool in the direction perpendicular to the process proceeding direction, for example, it is possible to avoid interference of a working tool, such as a saw blade, with the ruler plate when the cutting tool is used in the state that the working tool is inclined relative to the vertical direction. Therefore, it is possible to improve the operability of the guide device.

At least two different types of connection members for use with different types of power tools may be prepared as the plurality of connection members. In this connection, the adapter base may includes a plurality of different types of attaching portions each configured to be able to attach only corresponding one of the at least two different types of connection members.

With this arrangement, for example when the connection members removed from the attaching portions of the adapter base are attached again to the attaching portions, the connection members can be attached to the attaching portions in the state that the connection members are properly oriented or properly positioned. Therefore, it is possible to avoid improper attaching of the connection members to the attaching portions. Hence, the guide device can be rapidly properly connected to the power tool, and the operability of the guide device can be further improved. In addition, it is possible to prevent a workpiece from being improperly worked by the power tool.

The plurality of different types of attaching portions may include a first attaching portion and a second attaching portion each including a restricting portion for preventing the other types of connection members from being connected to the first attaching portion or the second attaching portion. Preferably, one of the connection members connectible with the first attaching portion can be attached to the second attaching portion by reversing the orientation with respect to the longitudinal direction.

In this way, the same connection member can be used for both of the first and second attaching portions each having the restricting portion for preventing connection of the other types of connection members. Therefore, it is possible to reduce the number of parts of the guide device. In addition, it is possible to further improve the operability of the guide device.

For example, it may be configured such that one of the connection members connectible with the first attaching portion cannot be attached to the second attaching portion when the orientation is reversed with respect to the longitudinal direction. Therefore, improper connection of the other types of connection members can be further reliably prevented.

In another example, the attaching portions may include a front attaching portion and a rear attaching portion configured to be able to attach the front connection member and the rear connection member, respectively. The adapter base may further include at least one additional attaching portion positioned between the front attaching portion and the rear attaching portion, so that the front connection member or the rear connection member can be attached to one of the at least one additional attaching portion.

The at least two connection members may include a reference connection member and an auxiliary connection member. The reference connection member can be attached to both of the front attaching portion and the rear attaching portion but cannot be attached to the at least one additional attaching portion. The auxiliary connection member can be attached to any of the front attaching portion, the rear attaching portion and the at least one additional attaching portion.

The at least one additional attaching portion may include a first additional attaching portion and a second additional attaching portion. In this connection, the auxiliary connection member may include a first auxiliary connection member and a second auxiliary connection member. The first auxiliary connection member can be attached to the first additional attaching portion but cannot be attached to the second auxiliary attaching portion. The second auxiliary connection member can be attached to the second additional attaching portion but cannot be attached to the first auxiliary attaching portion.

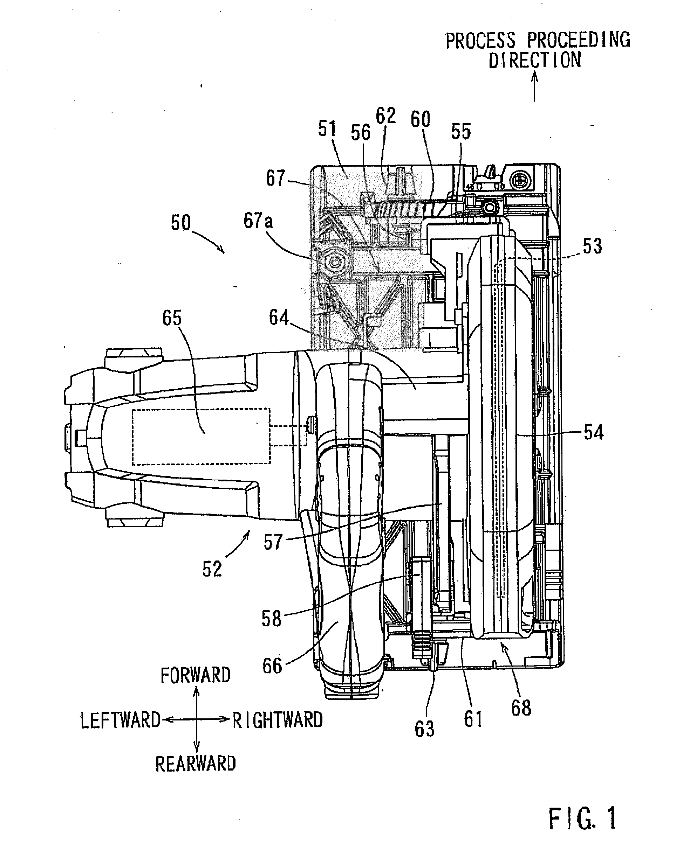

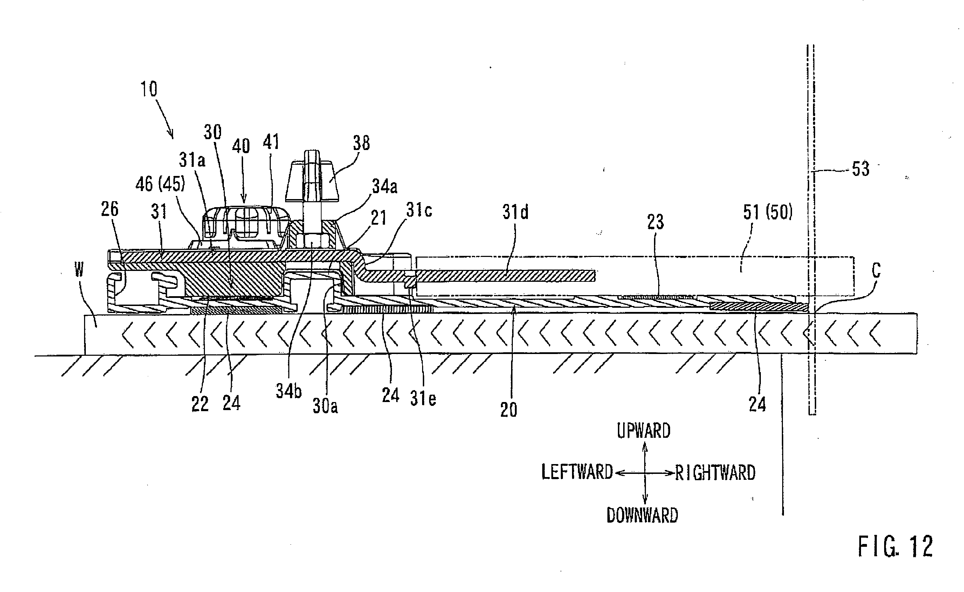

A representative embodiment will now be described with reference to FIGS. 1 to 17. In this embodiment, a cutting tool 50 called a portable circular saw will be exemplified as an example of a power tool. A guide device 10 may be attached to the cutting tool 50, so that the cutting tool 50 can be moved accurately along a substantially straight line by a long distance for performing a cutting operation. The cutting tool 50 will be described in brief.

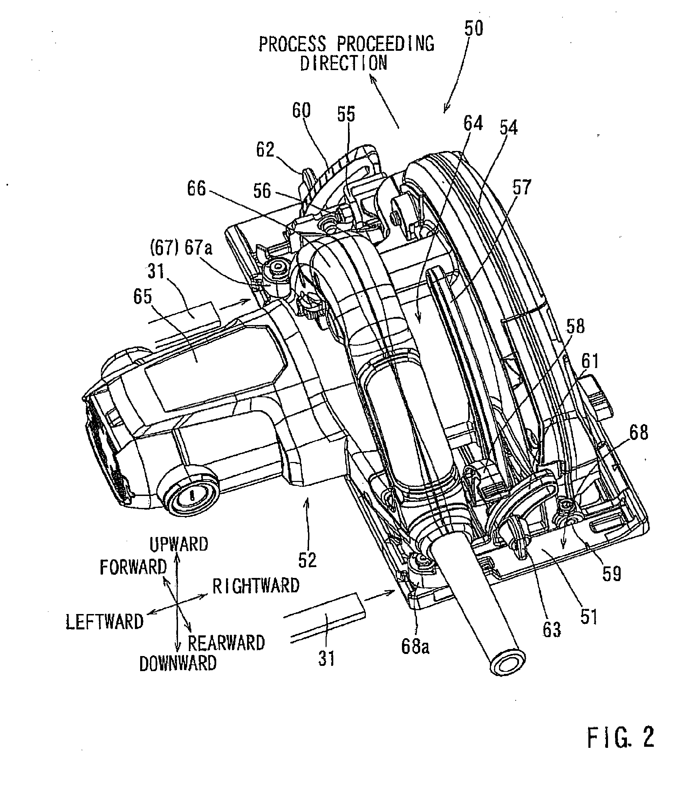

For the purpose of explanation, forward, rearward and rightward directions will be determined with reference to a cut proceeding direction, along which the cutting tool 50 may be moved for performing a cutting operation. In FIGS. 1 and 2, the cutting tool 50 is shown in the state where the cutting tool 50 is detached from the guide device 10.

The cutting tool 50 may include a substantially rectangular base 51 that may be placed on a workpiece W to be cut. A tool unit 52 may be supported on the base 51. The tool unit 52 may include a circular saw blade 53 and a blade case 54. The saw blade 53 serves as a working tool. A blade case 54 may cover substantially upper circumferential half of the peripheral edge of the saw blade 53. The base 51 may support the blade case 54 at two positions, i.e., a front portion and a rear portion of the blade case 54, with respect to the cut proceeding direction.

The front portion with respect to the cut proceeding direction (upper portion as viewed in FIG. 1) of the blade case 54 may be vertically tiltably supported via a vertical pivot shaft 56 of a pivotal support bracket 55.

The base 51 may support the rear portion of the blade case 54 via a depth guide 57. The depth guide 57 may be a guide plate having a strip-like shape curved along an arc. The depth guide 57 may be attached to the base 51 to extend upward along the backside surface (left side surface) of the blade case 54. A fixing lever 58 has a threaded portion that may be engaged with the backside surface of the blade case 54 through the depth guide 57. Therefore, the tool unit 52 can be fixed with respect to the tilt position by tightening the threaded portion of the fixing lever 58 into the backside surface of the blade case 54. With the threaded portion of the fixing lever 58 loosened, the rear portion of the blade case 54 can move vertically under the guide of the depth guide 57, so that the tool unit 52 can pivot vertically via the vertical pivot shaft 56 positioned on the front side. In this way, a protruding distance of the saw blade 53 downwardly from the lower surface of the base 51 can be adjusted. Eventually, a cutting depth of the saw blade 53 into the workpiece W can be adjusted.

Although not shown in the drawings, a movable cover may cover a downwardly protruding portion of the saw blade 53, which protrudes downwardly from the lower surface of the base 51. During the cutting operation, the movable cover may contact an end portion of the workpiece W and may be pushed to be opened by the end portion of the workpiece W as the cutting tool 50 moves in the cut proceeding direction. In this way, the downwardly protruding portion of the saw blade 53 exposed from the movably cover may cut into the workpiece W.

The blade case 54 may be supported by the base 51 so as to be able to tilt laterally (leftward and rightward) via front and rear lateral pivot shafts 59 that are respectively positioned at the front portion and the rear portion of the base 51. In FIG. 2, there is shown the rear lateral pivot shaft 59. A front angular plate 60 and a rear angular plate 61 may be respectively attached to the front portion and the rear portion of the base 51. The front portion of the blade case 54 may be fixed relative to the front angular plate 60 by using a fixing screw 62. Similarly, the rear portion of the blade case 54 may be fixed relative to the rear angular plate 60 by using a fixing screw 63. In this way, by fixing the front portion and the rear portion of the blade case 54 relative to the front angular plate 60 and the rear angular plate 61, respectively, the laterally tilt position of the blade case 54 (and eventually that of the tool unit 52) can be fixed relative to the base 51. With the blade case 54 or the tool unit 52 fixed at a desired laterally tilt position that is inclined relative to the vertical direction about the lateral pivot shafts 59, it is possible to perform a so-called inclined cutting operation.

A reduction gear section 64 may be positioned on the backside of the blade case 54 and may be integrated with the blade case 54. The reduction gear section 64 may have a substantially cylindrical gear case and a reduction gear train (not shown) disposed within the gear case. A drive motor 65 may be coupled to the reduction gear section 64. As shown in FIGS. 1 and 2, the reduction gear section 64 and the drive motor 65 may protrude leftward from the backside of the blade case 54.

A handle 66 may be positioned at a position adjacent to the joint portion between the reduction gear section 64 and the drive motor 65. One hand or both hands of the user may grasp the handle 66. The handle 66 may be configured as a loop-shaped handle and may extend between the upper surface of the reduction gear section 65 and the rear surface of the same with respect to the cut proceeding direction. A trigger-type switch (not shown) may be mounted to the inner circumferential side of the handle 66. The drive motor 65 may be started when the user pushes the switch. The rotation of the drive motor 65 may be transmitted to a spindle (not shown), to which the saw blade 53 is mounted, via the reduction gear train of the reduction gear section 65. In this way, the saw blade 53 may be rotated by the drive motor 65. In this embodiment, the drive motor 65 is an electric motor. However, the drive motor 65 may be replaced with any other drive device, such as an internal combustion engine.

The base 51 may include a front ruler attaching portion 67 and a rear ruler attaching portion 68 that are positioned on the front side and the rear side, respectively, with respect to the cut proceeding direction. The front ruler attaching portion 67 and the rear ruler attaching portion 68 may be configured to be able to attach a parallel ruler (not shown). Each of the ruler attaching portions 67 and 68 may be formed with a groove that extends in a widthwise direction of the base 51. In this embodiment, the widthwise direction of the base 51 is substantially perpendicular to the cut proceeding direction. Therefore, the groove may extend in the left and right direction with respect to the cut proceeding direction. A threaded fixing lever 67a may be threadably engaged with a threaded insertion hole formed in the vertical direction in the ruler attaching portion 67 in communication with the groove. Similarly, a threaded fixing lever 68a may be threadably engaged with a threaded insertion hole formed in the vertical direction in the ruler attaching portion 68. The parallel ruler may have support arms that can be inserted into the grooves of the ruler attaching portions 67 and 68. Therefore, the parallel ruler can be filed to the base 51 by inserting the support arms into the grooves of the ruler attaching portions 67 and 68 and tightening the threaded fixing levers 67a and 68a into the threaded insertion holes until the lower ends of the threaded fixing levers 67a and 68a are pressed against the upper surfaces of the support arms. In this way, the parallel ruler may be attached to the base 51 such that it extends in parallel to the saw blade 53. In order to use the parallel ruler, the parallel ruler may be brought to contact the end surface of the workpiece W. Then, the cutting tool 50 may be moved together with the parallel ruler along the end surface of the workpiece W. Therefore, the cutting operation of the workpiece W can be made with the cut line accurately kept parallel to the end surface of the workpiece W.

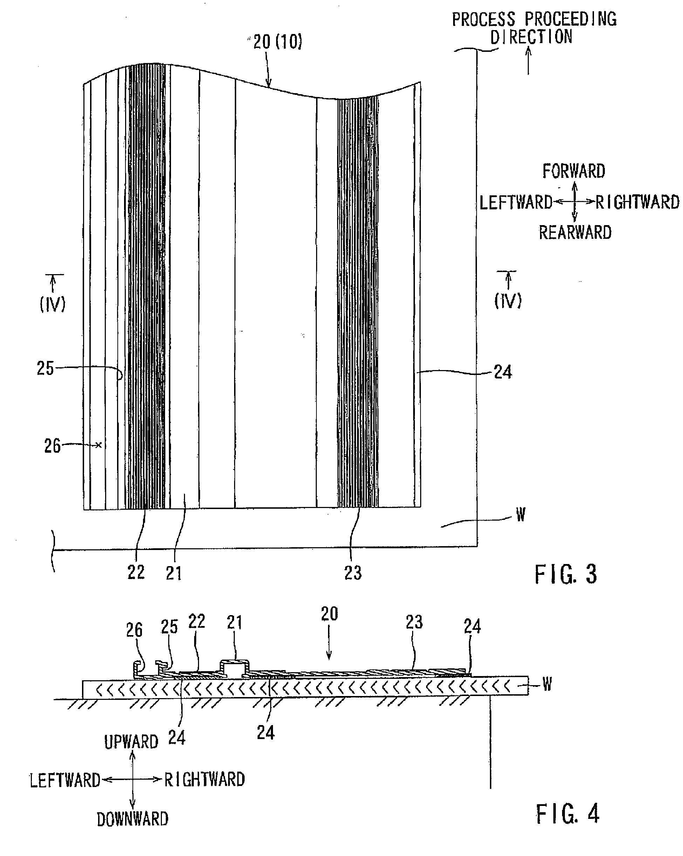

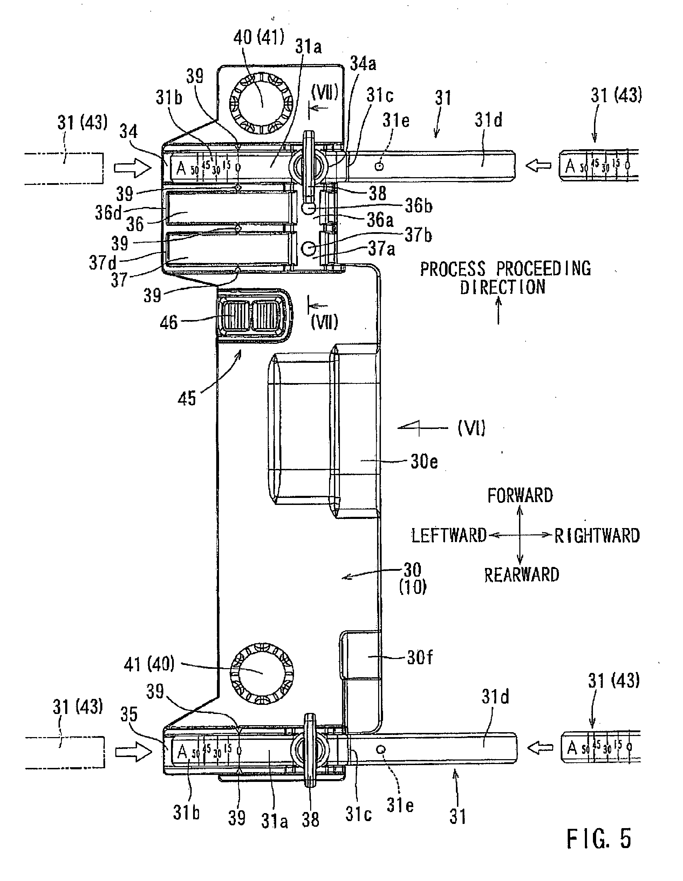

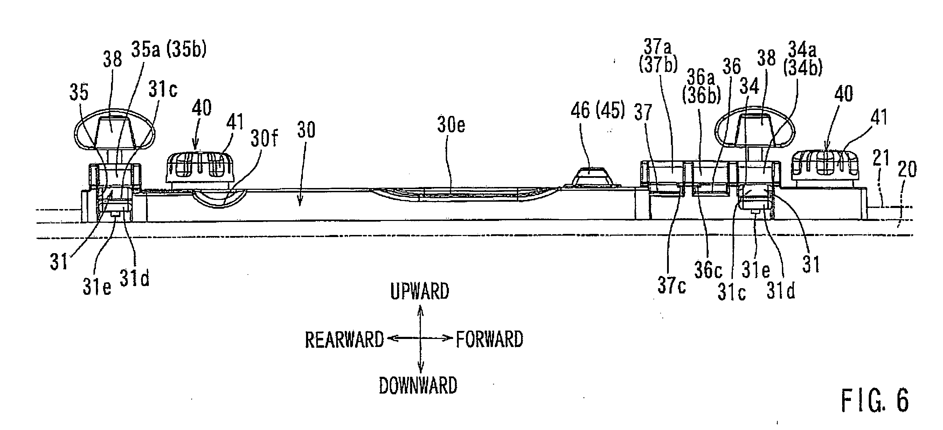

The guide device 10 of this embodiment may be attached to the base 51 and eventually to the cutting tool 50 by utilizing the front and rear ruler attaching portions 67 and 68 of the base 51. The guide device 10 may generally include an elongated ruler plate 20, an adapter base 30, a pair of first connection members 31, and a pair of second connection members 41. The ruler plate 20 may be placed on the upper surface of the workpiece W. The adapter base 30 may be placed on the upper surface of the ruler plate 20 so as to be movable along the cut proceeding direction. The pairs of first and second connection members 31 and 41 may be used for connecting the adapter base 30 to the base 51 of the cutting tool 50. FIGS. 3 and 4 show the ruler plate 20. FIGS. 5 and 6 show the adapter base 30 with the pairs of first and second connection members 31 and 41 attached thereto.

The ruler plate 20 may be a substantially flat plate with an elongated rectangular configuration and may be formed, for example, by a drawing process. A guide projection 21 may be formed on the upper surface of the ruler plate 20 to extend in the longitudinal direction (forward and rearward direction) throughout the length of the ruler plate 20. The guide projection 21 may be positioned to be offset from a central line with respect to the widthwise direction (right and left direction) by a given distance toward the left side edge. A low friction material 22 may be attached to the ruler plate 20 to extend throughout the length of the ruler plate 20 along the left side of the guide projection 21. Similarly, a low friction material 23 may be attached to the ruler plate 20 to extend throughout the length of the ruler plate 20 along the right side of the guide projection 21. The low friction materials 22 and 23 may be chosen to produce a low friction resistance against movement of the base 51. Therefore, the base 51 of the cutting tool 10 can be easily slid along the ruler plate 20 in the longitudinal direction.

In contrast, as shown in FIG. 4, slip-preventing members 24 made of high friction material, such as rubber, may be attached to the lower surface of the ruler plate 20 to extend throughout the length of the ruler plate 20 at thee positions, i.e., on left and right sides of the guide projection 21 and at the right edge of the ruler plate 20. When the ruler plate 20 is placed on the upper surface of the workpiece W, the slip-preventing members 24 may contact the upper surface of the workpiece W. Therefore, it is possible to prevent accidental displacement of the ruler plate 20 during the cutting operation. Eventually, it is possible to ensure a smooth movement of the cutting tool 50. As shown in FIGS. 3 and 4, the slip-preventing member 24 at the right edge of the ruler plate 20 may extend rightward from the right edge by a given distance, so that the right edge of the slip-preventing member 24 extends parallel to the right edge of the ruler plate 20 and is spaced by the given distance therefrom. In this way, the slip-preventing member 24 positioned at the right edge of the ruler plate 20 may be used as a reference plate that indirectly indicates the position of the saw blade 53. An auxiliary groove 26 with an upwardly oriented opening may be formed in the upper surface of the ruler plate 20 throughout the length of the ruler plate 20 along the left side edge. In addition, an engaging groove 25 may be formed in the upper surface of the ruler plate 20 throughout the length of the ruler plate 20 at a position on the right side of the auxiliary groove 26.

The adapter base 30 may be a substantially flat plate with a configuration elongated in the cut proceeding direction. The adapter plate 30 may be placed on the upper surface of the ruler plate 20 so as to be movable along the upper surface of the ruler plate 20. The pair of first connection members 31 may be attached to the front portion and the rear portion of the adapter base 30.

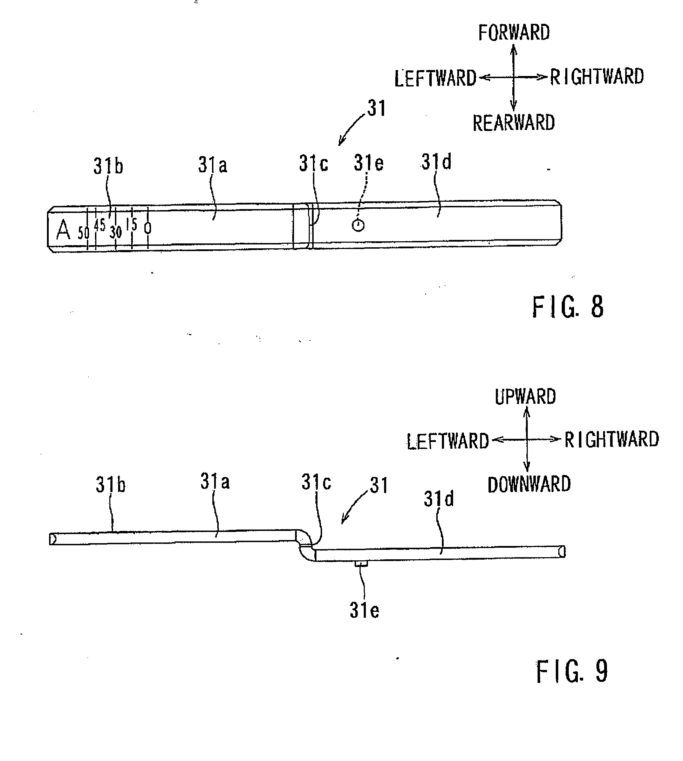

The first connection members 31 may be the same in construction. FIGS. 8 and 9 show one of the first connection members 31. As shown in these figures, the first connection member 31 may be a strip plate having a uniform width and bent into a crank shape at the central portion with respect to the longitudinal direction. The first connection member 31 may include a central bent portion 31c, a first side portion 31a and a second side portion 31d. The first side portion 31a and the second side portion 31d are respectively positioned on the left side and the right side of the central bent portion 31 c. The first side portion 31 and the second side portion 31d may be displaced from each other in the vertical direction by a distance substantially equal to the thickness of the first connection member 31. The upper surface of the first side portion 31a may have a type A scale 31b that may be directly marked or printed. The second side portion 31d may have a stopper projection 31e protruding downward from the lower surface of the second side portion 31d. The first connection members 31 may serve as reference connection members as will be described later.

One of the first connection members 31 may be attached to a front attaching portion 34 that may be provided at a front portion on the upper surface of the adapter 30. The other of the first connection members 31 may be attached to a rear attaching portion 35 that may be provided at a rear portion on the upper surface of the adapter 30. Each of the front attaching portion 34 and the rear attaching portion 35 may extend in the widthwise direction (right and left direction) of the adapter 30. In the attached state, the second side portions 31d of the first connection members 31 may extend rightward from the corresponding attaching portions 34 and 35.

As shown in FIGS. 5 and 6, two additional attaching portions 36 and 37 may be provided at the front portion on the upper surface of the adapter 30. Therefore, three attaching portions 34, 36 and 37 may be provided at the front portion. These attaching portions 34, 36 and 37 may be arranged adjacent to each other in the forward and rearward direction and may extend parallel to each other. For the purpose of explanation, the front attaching portion 34, the additional attaching portion 36 positioned on the rear side of the front attaching portion 34, and the additional attaching portion 37 positioned on the rear side of the additional attaching portion 36 will be hereinafter also referred to as a first attaching portion 34, a second attaching portion 36 and a third attaching portion 37, respectively. The rear attaching portion 35 provided at the rear portion of the upper surface of the adapter 30 will be hereinafter also referred to as a stationary attaching portion 35.

In this embodiment, the first connection members 31 can be attached to both of the first attaching portion 34 and the stationary attaching portion 35. However, the first connection members 31 cannot be attached to any of the second and third attaching portions 36 and 37. On the other hand, the second connection members 43 can be attached to both of the first attaching portion 34 and the stationary attaching portion 35 and also can be attached to the second and third attaching portions 36 and 37.

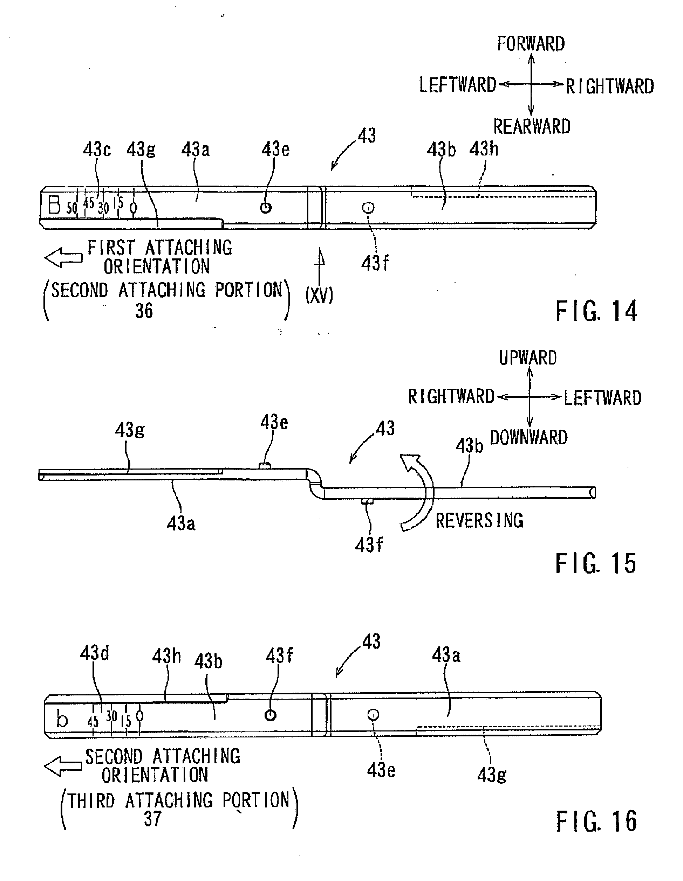

The second connection members 43 may be the same in construction. FIGS. 14 to 16 show one of the second connection members 43. The second connection member 43 can be attached to the third attaching portion 37 positioned on the rear side of the second attaching portion 36 only in the case that the orientation of the second connection member 43 is revered with respect to the longitudinal direction from the orientation for attaching to the second attaching portion 36 (see FIG. 15). In the following explanation, the first connection members 31 will be also referred to as reference connection members 31, and the second connection members 43 will be also referred to as auxiliary connection members 43.

As shown in FIGS. 14 to 16, similar to the reference connection member 31, the auxiliary connection member 43 may be a strip plate having a uniform width and bent into a crank shape at the central portion with respect to the longitudinal direction. The auxiliary connection member 43 may include a first side portion 43a and a second side portion 43b respectively positioned on the left side and the right side of a central bent portion (see FIG. 14). The first side portion 43a and the second side portion 43b may be displaced from each other in the vertical direction by a distance substantially equal to the thickness of the auxiliary connection member 43. The upper surface of the first side portion 43a may have a type B scale 43c that may be directly marked or printed. The lower surface of the second side portion 43b may have a type b scale 43d that may be directly marked or printed. The first side portion 43a may have a stopper projection 43e protruding upwardly from the upper surface of the first side portion 43a. The second side portion 43b may have a stopper projection 43f protruding downward from the lower surface of the second side portion 43b.

As shown in FIG. 14, a first relief recess 43g may be formed along the rear edge of the upper surface of the first side portion 43a and may extend by a given distance in the longitudinal direction. As shown in FIG. 16, a second relief recess 43h may be formed along the front edge of the lower surface of the second side portion 43b and may extend by a given distance in the longitudinal direction.

As indicated by an outline arrow in FIG. 14, the auxiliary connection member 43 can be attached to the adapter base 30 by inserting the first side portion 43a into the second attaching portion 36. In the following explanation, the orientation of the auxiliary connection member 43 taken when inserting the first side portion 43a into the second attaching portion 36 will be referred to as a first attaching orientation. On the other hand, as indicated by an outline arrow in FIG. 16, the orientation of the auxiliary connection member 43 taken when inserting the second side portion 43b into the third attaching portion 37 for attaching the auxiliary connection member 43 to the adapter base 30 will be referred to as a second attaching orientation. The first attaching orientation may be changed to the second attaching orientation by reversing the auxiliary connector member 43 with respect to the longitudinal direction as shown in FIG. 15.

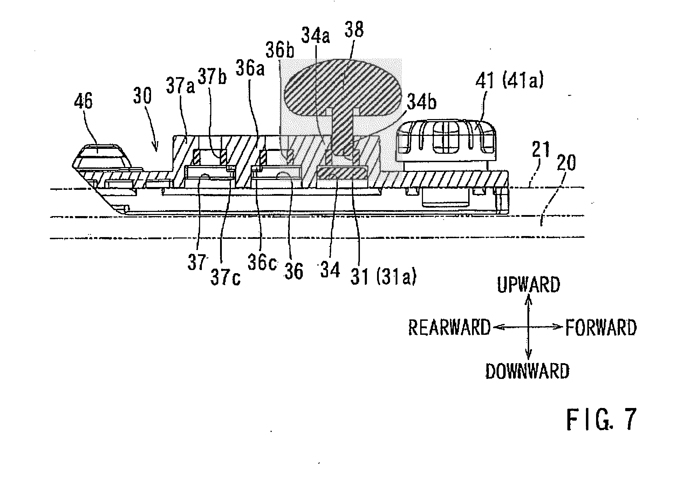

Each of the first attaching portion 34 and the stationary attaching portion 35 may include a groove having a width and a depth that are suitable for receiving the reference connection member 31 and/or the auxiliary connection member 43. Each of the second attaching portion 36 and the third attaching portion 37 may include a groove having a width and a depth that are suitable for receiving the auxiliary connection member 43. Arch-shaped inlet portions 34a, 35a, 36a and 37a may be formed on the upper surface of the adapter base 30 at positions proximal to the right ends of the attaching portions 34, 35, 36 and 37, respectively. As shown in FIG. 7, the inlet portions 34a, 36a and 37a may be formed in series with each other in the forward and rearward direction. Each of the inlet portions 34a, 35a, 36a and 37a may have an upper will extending over the corresponding groove in the widthwise direction. As indicated by solid lines in FIG. 5, the connection member 31 or 43 may be inserted into each of the attaching portions 34, 35, 36 and 37 via the corresponding inlet portion 34a, 35a, 36a or 37a from the right side. Threaded holes 34b, 35b, 36b and 37b may be respectively formed in the upper walls of in the inlet portion 34a, 35a, 36a and 37a. A fixing screw 38 may be engaged with and tightened into each of the threaded holes 34b, 35b, 36b and 37b.

In FIGS. 5 and 6, there is shown a state where two fixing screws 38 are respectively engaged and tightened into the threaded holes 34b of the inlet portion 34a of the first attaching portion 34 and the threaded hole 35b of the inlet portion 35a of the stationary attaching portion 35. No fixing screw 38 engages the threaded hole 36b of the inlet portion 36a of the second attaching portion 36 and the threaded hole 37b of the inlet portion 37a of the third attaching portion 37. Therefore, only the threaded holes 36b and 37b are shown in FIG. 5. The fixing screw 38 can be removed from the inlet portion 34a of the first attaching portion 34 for engaging with the inlet portion 36a of the second attaching portion 36 or the inlet portion 37a of the third attaching portion 37. In this way, one of the two fixing screws 38 may be used for fixing the reference connection member 31 or the auxiliary connection member 43 to the first attaching portion 34 or for fixing the auxiliary connection member 43 to the second attaching portion 36 or the third attaching portion 37. The other of the two fixing members 38 may be used for fixing the reference connection member 31 or the auxiliary connection member 43 to the stationary attaching portion 35.

As shown in FIGS. 6 and 7, the inner wall of the inlet portion 36a of the second attaching portion 36 is formed with a restriction projection 36c that extends into the groove of the second attaching portion 36. Similarly, the inner wall of the inlet portion 37a of the third attaching portion 37 is formed with a restriction projection 37c that extends into the groove of the third attaching portion 37. The restriction projection 36c may be poisoned at the rear upper corner of the groove of the second attaching portion 36. The restriction projection 37c may be positioned at the front upper corner of the groove of the third attaching portion 37.

The reference connection member 31 has no relief recess for avoiding interaction with the restriction projections 36c and 37c. Therefore, the reference connection member 31 may interact with the restriction projections 36c when the reference connection member 31 is moved to be inserted into the second attaching portion 36. Similarly, the reference connection member 31 may interact with the restriction projections 37c when the reference connection member 31 is moved to be inserted into the second attaching portion 37. As a result, the reference connection member 31 cannot be attached to any of the second attaching portion 36 and the third attaching portion 37.

On the other hand, when the auxiliary connection member 43 is moved to be inserted into the second attaching portion 36 while the auxiliary connection member 43 is oriented in the first attaching orientation where the angular scale 43c of the first side portion 43a is oriented upward, the restriction projection 36c may be aligned with the relief recess 43g at the rear upper corner of the groove of the second attaching portion 36. Therefore, the restriction projection 36c may not interfere with the auxiliary connection member 43. Thus, the restriction projection 36c may move along the relief recess 43g. In this way, it is possible to attach the auxiliary connection member 43 to the second attaching portion 36 when the auxiliary connection member 43 is in the first attaching orientation. However, when the auxiliary connection member 43 in the first attaching orientation is moved to be inserted into the third attaching portion 37, the restriction projection 37c positioned at the front upper corner of the groove of the third attaching portion 37 is not aligned with the relief recess 43g. Therefore, the restriction projection 37c may interfere with the movement of the auxiliary connection member 43. In this way, the auxiliary connection member 43 cannot be attached to the third attaching portion 37 when the auxiliary connection member 43 is in the first attaching orientation.

However, when the auxiliary connection member 43 is moved to be inserted into the third attaching portion 37 while the auxiliary connection member 43 is oriented in the second attaching orientation where the auxiliary connection member 43 is reversed with respect to the longitudinal direction such that the angular scale 43d of the second side portion 43b is oriented upward, the restriction projection 37c may be aligned with the relief recess 43h at the front upper corner of the groove of the third attaching portion 37. Therefore, the restriction projection 37c may not interfere with the auxiliary connection member 43. Thus, the restriction projection 37c may move along the relief recess 43h. In this way, it is possible to attach the auxiliary connection member 43 to the third attaching portion 37 when the auxiliary connection member 43 is in the second attaching orientation. On the other hand, when the auxiliary connection member 43 in the second attaching orientation is moved to be inserted into the second attaching portion 36, the restriction projection 36c positioned at the rear upper corner of the groove of the second attaching portion 36 is not aligned with the relief recess 43h. Therefore, the restriction projection 36c may interfere with the movement of the auxiliary connection member 43. In this way, the auxiliary connection member 43 cannot be attached to the second attaching portion 36 when the auxiliary connection member 43 is in the second attaching orientation.

As described above, in this embodiment, the reference connection member 31, the auxiliary connection member 43 in the first attaching orientation, and the auxiliary connection member 43 in the second attaching orientation can be selectively attached to a predetermined one or two of the first, second and third attaching portions 34, 36 and 37. Therefore, it is possible to prevent the connection members 31 and 43 from being improperly attached.

In this embodiment, the auxiliary connection member 43 can be attached to any of the first attaching portion 34 and the stationary attaching portion 35 when the auxiliary connection member 43 is oriented in any of the first and second attaching orientations.

The following table shows the attachability of each of the reference connection member 31, the auxiliary connection member 43 in the first attaching orientation, and the auxiliary connection member 43 in the second attaching orientation to the attaching portions 34, 35, 36 and 37.

| | Reference Connection Member 31 | Auxiliary Connection Member 43 (First Orientation) | Auxiliary Connection Member 43 (Second Orientation) |
|---|---|---|---|
| First Attaching Portion 34 | YES | YES | YES |
| Second Attaching Portion 36 | NO | YES | NO |
| Third Attaching Portion 37 | NO | NO | YES |
| Stationary Attaching Portion 35 | YES | YES | YES |

Each of the attaching portions 34, 35, 36 and 37 may include indicators 39 that can indicate angles on the angular scales 31b (43c and 43d) of the connection member 31 (43).

The reference connection member 31 may be fixed to the first attaching portion 34 by inserting the first side portion 31a into the first attaching portion 34 and tightening the fixing screw 38. Similarly, the auxiliary connection member 43 may be fixed to the first attaching portion 34 by inserting the first side portion 43a or the second side portion 43b into the first attaching portion 34 and tightening the fixing screw 38.

The auxiliary connection member 43 may be fixed to the second attaching portion 36 by inserting the first side portion 43a into the second attaching portion 36 and tightening the fixing screw 38. In addition, the auxiliary connection member 43 may be fixed to the third attaching portion 37 by inserting the second side portion 43b into the third attaching portion 37 and tightening the fixing screw 38.

The reference connection member 31 may be fixed to the stationary attaching portion 35 by inserting the first side portion 31a into the stationary attaching portion 35 and tightening the fixing screw 38. Similarly, the auxiliary connection member 43 may be fixed to the stationary attaching portion 35 by inserting the first side portion 43a or the second side portion 43b into the stationary attaching portion 35 and tightening the fixing screw 38.

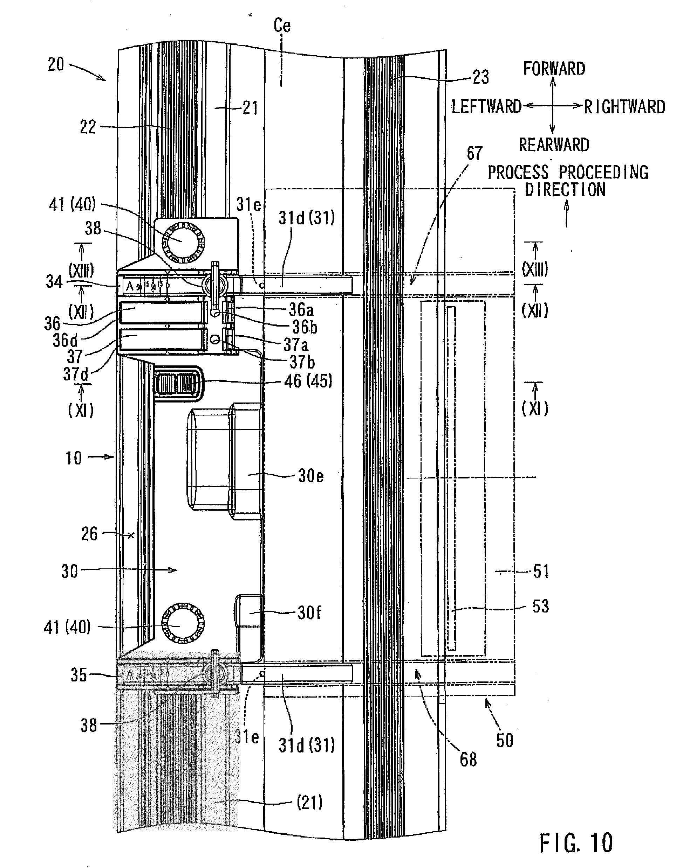

When two reference connection members 31 are respectively attached to be fixed to the first attaching portion 34 and the stationary attaching portion 35 that is positioned on the rear side of the first attaching portion 34, the second side portions 31d of the reference connection members 31 may extend rightward from the adapter base 30. The second side portions 31d extending from the adapter base 30 may be respectively inserted into and fixed to the front ruler attaching portion 67 and the rear ruler attaching portion 68 that are provided on the base 51 for attaching the parallel ruler. In this way, the adapter base 30 can be connected to the left side of the base 51 of the cutting tool 50 as shown in FIGS. 10 to 13.

By removing the reference connection member 31 from the first attaching portion 34 and attaching the auxiliary connection member 43 to the second attaching portion 36 or the third attaching portion 37, it is possible to change the distance between two connection members. To this end, the distances from the stationary attaching portion 35 to the first, second and third attaching portions 34, 36 and 37 may be suitably determined to correspond to different distances between the first ruler attaching portion 67 and second ruler attaching portion 68, which may vary according to specifications or sizes of cutting tools to be applied.

Therefore, according to the distance between the ruler attaching portions 67 and 68 of the cutting tool 50 to be used, the reference connection member 31 or the auxiliary connection member 43 may be attached to the first attaching portion 34, the auxiliary connection member 43 in the first attaching orientation may be attached to the second attaching portion 36, or the auxiliary connection member 43 in the second attaching orientation may be attached to the third attaching portion 37. In this way, the guide device 10 can be attached to three different cutting tools that are different in the distance between the first ruler attaching portion 67 and second ruler attaching portion 68.

FIGS. 10 to 13 show the state where the cutting tool 50 has been placed on the ruler plate 20 via the adapter base 30. In these figures, only the base 51 and the saw blade 53 of the cutting tool 50 are shown by two-dot chain lines. In FIG. 10, two reference connection members 31 are used and are inserted into the ruler attaching portions 67 and 68 from the left side that is opposite to the side from which the parallel ruler is inserted. Therefore, the adapter base 30 is connected to the left side of the base 51 as described previously. The fixing lever 67a of the ruler attaching portion 67 and the fixing lever 68a of the ruler attaching portion 68 may be tightened for fixing the reference connection members 31 to the ruler attaching portions 67 and 68 in order to prevent the reference connection members 31 from being removed. A maximum insertion distance of each of the reference connection members 31 may be limited by the stopper projection 31e that can contact the left edge of the base 51.

As described above, with the guide device 10 of this embodiment, the distance between the connection member positioned on the front side (i.e., the reference connection member 31 or the auxiliary connection member 43 attached to the stationary attaching portion 35) and the connection member positioned on the rear side (i.e., the reference connection member 31 or the auxiliary connection member 43 attached to any one of the attaching portions 34, 36 and 37) can be changed between three different distances according to the distance of the ruler attaching portions 67 and 68. In addition, by changing the attaching position with respect to the left and right direction of each of the connection members 31 and/or 43, it is possible to cope with an inclined cutting operation that is performed with the tool unit 52 inclined relative to the workpiece W.

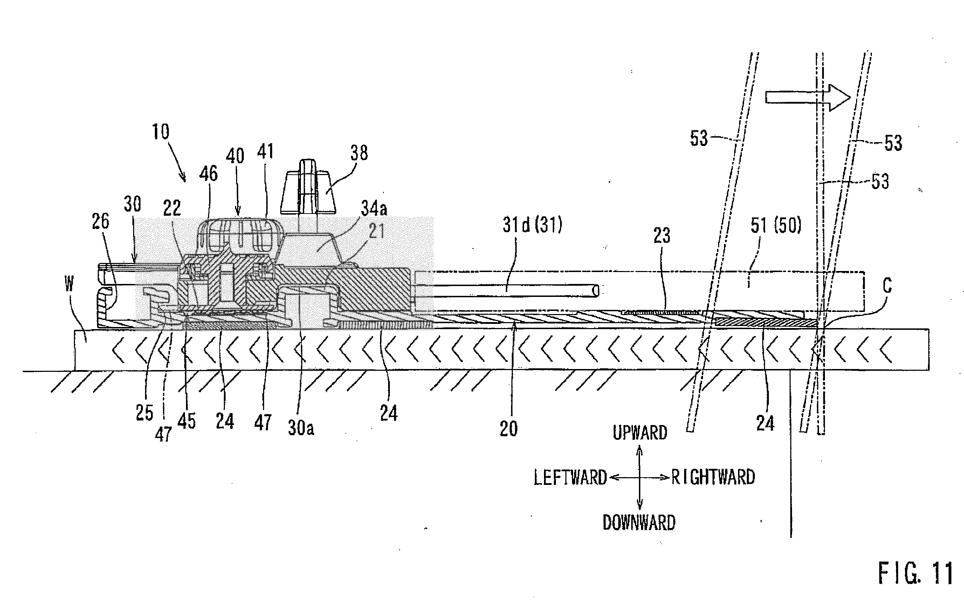

During the cutting operation of the workpiece W by the saw blade 53 of the cutting tool 50, the saw blade 53 may be spaced rightward from the right edge of the ruler plate 20 by a given distance. In FIG. 11, there is shown a cutting position C where the saw blade 53 cuts into the workpiece W.

As shown in FIG. 11, the cutting position C during the cutting operation with the saw blade 53 positioned vertically relative to the workpiece W (vertical cutting operation) may not coincide with the laterally pivoting (tilting) center of the tool unit 52. Therefore, when the tool unit 52 is tilted to the left side, the cutting position C may be shifted to the right side. When the tool unit 52 is tilted to the right side, the cutting position C may be shifted to the left side.

For example, when the tool unit 52 is tilted to the right side by an angle of 30° to cause the lower end of the saw blade 53 to shift leftward, the cutting position C may be shifted leftward as show by the two-dot chain lines in FIG. 11. Therefore, it may be appropriate to tilt the tool unit 52 in the state that the cutting tool 50 on the ruler plate 20 is shifted to the right as indicated by an outline arrow. In this connection, in the case of this embodiment, the first side portion 31a of the reference connection member 31 has the A type angular scale 31b. The A-type angular scale 31b includes numerical values (0, 15, 30, 45 and 50) that are determined to correspond to the right tilt angle of the tool unit 52.

Therefore, when an inclined cutting operation is performed with the tool unit 52 inclined rightward by a desired angle selected between 0, 15, 30, 45 and 50 degrees by using two reference connection members 31 attached to the first attaching portion 34 and the stationary attaching portion 35, the position with respect to the right and left direction of one of the reference connection members 31 may be adjusted such that the desired angle value of the angular scale 31b is pointed by the indicators 39 of the first attaching portion 34. Similarly, the position with respect to the right and left direction of the other of the reference connection members 31 may be adjusted such that the desired angle value of the angular scale 31b is pointed by the indicators 39 of the stationary attaching portion 35. With this arrangement, the position of the saw blade 53 may be shifted to the right away from the right edge of the ruler plate 20 as indicated by the outline arrow in FIG. 11. In this way, the inclined cutting operation with the tool unit 52 tilted laterally by the desired angle while the cutting position C by the saw blade 53 is not changed from that of the vertical cutting operation. In this embodiment, the cutting position C may be kept to be the same for inclined cutting operations with the tool unit 52 tilted by angles of 0, 15, 30, 45 and 50 degrees. Here, the inclined operation with the tool unit 52 tilted by an angle of 0 degree corresponds to the vertical cutting operation. Therefore, the cutting operation can be easily rapidly performed with the tool unit 52 tilted laterally by the desired angle.

In the case of the vertical cutting operation, the position of the saw blade 43 with respect to the left and right direction relative to the right edge of the ruler plate 20 can be changed by changing the attaching positions of the reference connection members 31 with respect to the left and right direction relative to the first attaching portion 34 and the stationary attaching portion 35. In this way, it is possible to change the cutting position C of the saw blade 43 into the workpiece W.

More specifically, the attaching positions of the reference connection members 31 with respect to the left and right direction relative to the first attaching portion 34 and the stationary attaching portion 35 can be changed by loosening the fixing screws 38. Thus, by changing the attaching positions of the reference connection members 31 with respect to the left and right direction relative to the first attaching portion 34 and the stationary attaching portion 35, the extending distance of each of the second side portions 31d from the adapter base 30 can be changed. Hence, it is possible to change the position of the adapter base 30 relative to the base 51 of the cutting tool 50.

Also in the case that the auxiliary connection member 43 is attached to the second attaching portion 36 or the third attaching portion 37 in place of attaching the reference connection member 31 to the first attaching portion 31, it is possible to change the attaching position according to the desired tilt angle of the tool unit 52. Thus, the attaching position of the first side portion 43a of the auxiliary connection member 43 with respect to the left and right direction relative to the second attaching portion 36 may be adjusted such that the desired angle value of the B type angular scale 43c is pointed by the indicators 39 of the second attaching portion 36. The attaching position of the second side portion 43b of the auxiliary connection member 43 with respect to the left and right direction relative to the third attaching portion 37 may be adjusted such that the desired angle value of the b type angular scale 43d is pointed by the indicators 39 of the third attaching portion 37.

As shown in FIGS. 11 to 13, a guide groove 30a may be formed in the lower surface of the adapter base 30 to extend throughout the length of the adapter base 30 in the forward ad rearward direction. As shown in these figures, the adapter base 30 may be placed on the ruler plate 20 such that the guide projection 21 of the ruler plate 20 is inserted into the guide groove 30a. Therefore, the adapter plate 30 and eventually the cutting tool 50 connected to the adapter plate 30 can move accurately along a substantially straight line under the guide of the guide projection 21.

The adapter base 30 may slidably contact the low friction material 22 of the ruler plate 20. In addition, the base 51 of the cutting tool 50 may slidably contact the low friction material 23 of the ruler plate 20. Therefore, the adapter base 30 and the cutting tool 50 can smoothly move along a substantially straight line relative to the ruler plate 20. Further, the ruler plate 20 may be placed on the workpiece W while the slip-preventing materials 24 attached to the lower surface of the ruler plate 20 frictionally contact the upper surface of the workpiece W. Therefore, it is possible to prevent accidental displacement of the ruler plate 20 during the cutting operation. Also in this respect, the cutting tool 50 can be smoothly moved along the straight line. As a result, the cutting operation can be easily accurately performed.

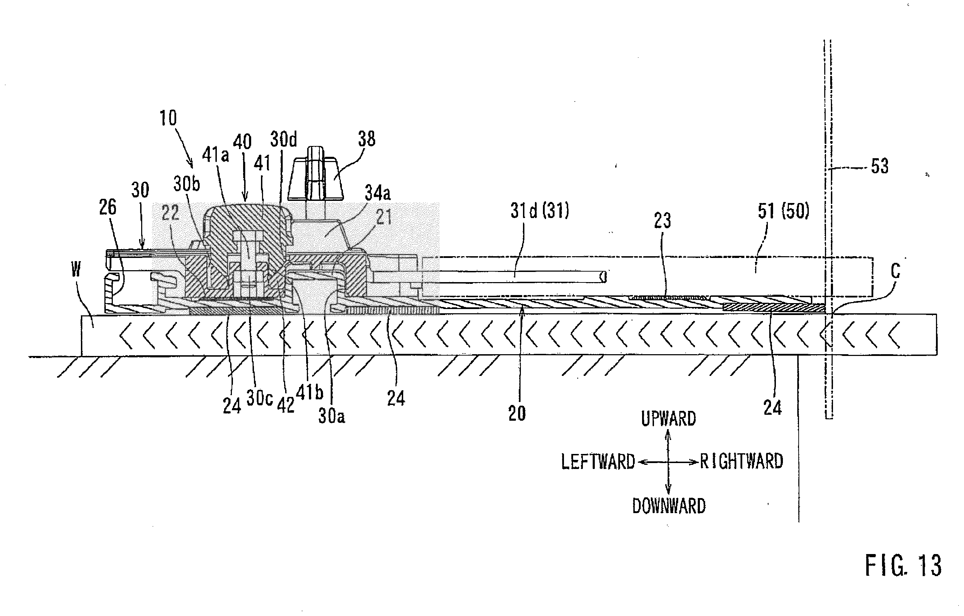

The adapter base 30 may include two shifting movement preventing mechanisms 40 for preventing the adapter base 30 from being accidentally shifted from the ruler plate 20. One of the two shifting movement preventing mechanisms 40 may be positioned at the front portion of the adapter base 30. One of the two shifting movement preventing mechanisms 40 may be positioned at the rear portion of the adapter base 30. These two shifting movement preventing mechanisms 40 may have the same construction. Therefore, the construction of only one of the shifting movement preventing mechanisms 40 will be described. FIG. 13 shows the shifting movement preventing mechanism 40 positioned at the front portion. The shifting movement preventing mechanism 40 may include a dial 41 that can be rotated by the user. A threaded shaft 41 a may be mounted within the lower portion of the dial 41 so as to have the same axis as the rotational axis of the dial 41. The lower portion of the dial 41 is formed with a cylindrical actuation portion 41b located around the lower portion of the threaded shaft 41a. On the other hand, the adapter base 30 may include a bottomed recess 30b that receives the dial 41. The threaded shaft 41a may engage a threaded hole 30c formed in an upwardly recessed central portion of the bottom of the recess 30b. Therefore, the dial 41 may move upward and downward as the dial 41 rotates. An annular cushioning member 42 having resiliency may be interposed between the actuation portion 41b of the dial 41 and the bottom of the recess 30b. The recess 30b may communicate with the guide groove 30a via a window 30d that is formed in a part of the circumferential wall of the recess 30b.

With this arrangement, when the dial 41 is rotated in a tightening direction of the threaded shaft 41a, the threaded shaft 41a moves downward through engagement with the threaded hole 30c, so that the cylindrical actuation portion 41b moves downward. Therefore, the cushioning member 42 may be compressed to be enlarged radially outward. To this end, the lower end of the cylindrical actuation portion 41b and the upper surface of the cushioning member 42 may be tapered in the downward direction, so that these surfaces may serve as cam surfaces for forcing the cushioning member 42 to be enlarged radially outward. As the cushioning member 42 is radially outwardly enlarged, a part of the cushioning member 42 may extend into the guide groove 30a so as to be pressed against the side surface of the guide projection 21 of the ruler plate 20.

In this way, by rotating the dials 41 of the shifting movement preventing mechanisms 40 at the front and the rear portions of the adapter base 30, the cushioning members 42 may be resiliently pressed against the side surface of the guide projection 21. Therefore, it is possible to prevent or inhibit accidental shifting movement of the guide groove 30a relative to the guide projection 21. As a result, it is possible to ensure the movement of the adapter base 30 and the cutting tool 50 along the straight line relative to the ruler plate 21. Changing the amount of rotational operation of each of the dials 41 can adjust the pressing force applied to the ruler plate 20 by the cushioning member 42. In this way, it is possible to adjust the operational force that may be required for moving the cutting tool 50 relative to the ruler plate 20 (i.e., the slide resistance applied to the cutting tool 50).

Referring back to FIG. 5, the adapter base 30 may further include a fall preventing mechanism 45. As shown in FIG. 11, the fall preventing mechanism 45 may include a lock switch 46 that can be moved to slide in the left and right direction by the user. In this embodiment, the lock switch 46 may be slidably movably mounted within the adapter base 30 at a position adjacent the left edge of the adapter base 30. An engaging plate 47 may be fixedly attached to the lower end of the lock switch 46, so that the engaging plate 47 can move in the left and right direction together with the lock switch 46. When the lock switch 46 is slid to the left, the engaging plate 47 also moves to the left, so that a left side portion of the engaging plate 47 extends outward from the left edge of the adapter base 30 and engages the engaging groove 25 that is formed in the upper surface of the ruler plate 20 at a position on the right side of the auxiliary groove 26. In FIG. 11, the left side portion of the engaging plate 47 engaging the engaging groove 25 is shown by two-dot chain lines.

With the fall preventing mechanism 45, when the lock switch 46 is slid leftward in FIGS. 5 and 11, the engaging plate 47 may engage the engaging groove 25 of the ruler plate 20. Therefore, the adapter plate 30 may be prevented from moving upward relative to the ruler plate 20. In this way, the cutting tool 50 can be prevented from tilting rightward. Therefore, the cutting tool 50 can be moved to be slid for a cutting operation while the cutting tool 50 is held in stable without falling to the right.

As shown in FIGS. 5 and 6, relief grooves 30e and 30f may be formed in the upper surface of the adapter base 30 and may extend leftward starting from the right edge of the adapter base 30. With the relief grooves 30e and 30f, it is possible to prevent interference of the drive motor 65, etc., of the cutting tool 50 with the adapter base 30.

As shown in FIG. 5, a restriction wall 36d may be formed at the left end of the second attaching portion 36. Similarly, a restriction wall 37d may be formed at the left end of the third attaching portion 37. Therefore, the auxiliary connection member 43 can be attached to the second attaching portion 36 only via the inlet portion 36a that is positioned proximal to the right end of the second attaching portion 36. Similarly, the auxiliary connection member 43 can be attached to the third attaching portion 37 only via the inlet portion 37a that is positioned proximal to the right end of the third attaching portion 37. In this way, the auxiliary connection member 43 can be attached to the second and third attaching portions 36 and 37 from only their left sides. In contrast, the first attaching portion 34 and the stationary attaching portion 35 have no restriction wall corresponding to the restriction wall 36d or 37d. Therefore, although the reference connection member 31 and the auxiliary connection member 43 can be attached to each of the first attaching portion 34 and the stationary attaching portion 35 via the inlet portions 34a and 35a positioned proximal to the right ends of the attaching portions 34 and 35 as shown by solid lines in FIG. 5, the reference connection member 31 and the auxiliary connection member 43 can be attached to each of the first attaching portion 34 and the stationary attaching portion 35 also from the left side as indicated by two-dot chain lines.

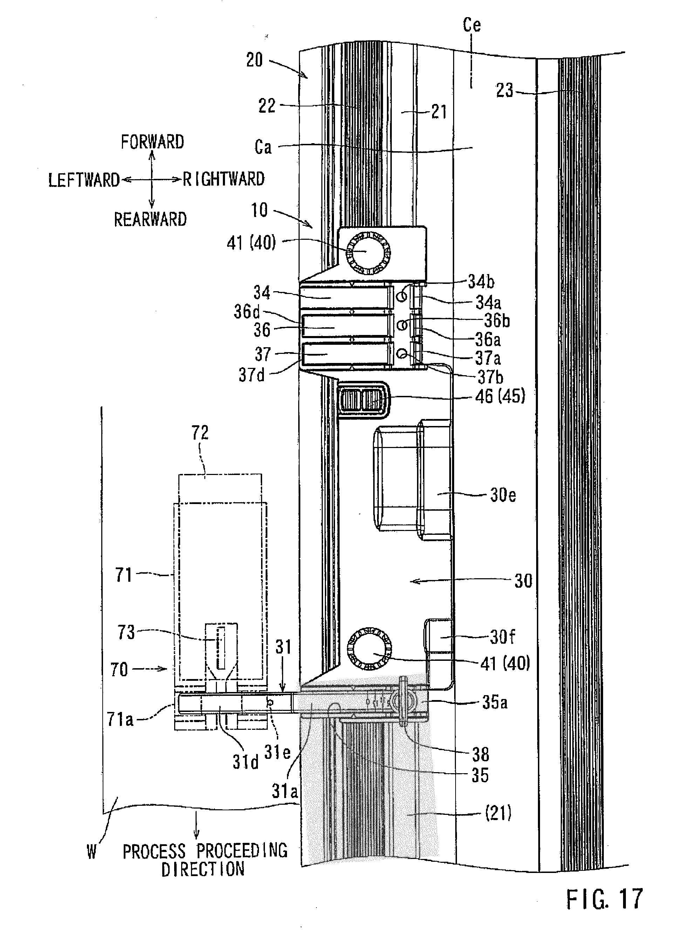

As shown in FIG. 10, the adapter base 30 may be offset leftward from a central line Ce with respect to a widthwise direction of the ruler plate 20, while the left edge of the adapter base 30 is substantially aligned with the left edge of the ruler plate 20 as viewed in a plan view. Therefore, for example, it may be possible to connect another power tool, such as a jigsaw 70, that is different in type from the cutting tool 50 (portable circular saw in this embodiment), on the left side of the adapter base 30. Thus, as shown in FIG. 17, the reference connection member 31 may be attached to the stationary attaching portion 35 by inserting the first side portion 31a of the reference connection member 31 into the stationary attaching portion 35 from the left side. Therefore, the reference connection member 31 may extend leftward from the adapter base 30. Then, the jigsaw 70 may be connected to the reference connection member 31. Because the left edge of the adapter base 30 is substantially aligned with the left edge of the ruler plate 20 as described previously, the jigsaw 70 may be positioned nearer to the adapter base 30 without causing interference with the ruler plate 20. In other words, the jigsaw 70 can cut the workpiece W in the state where a cutting blade 73 of the jigsaw 70 is positioned nearer to the ruler plate 20.

As schematically shown by two-dot chain lines in FIG. 17, the jigsaw 70 may include a substantially rectangular jigsaw base 71 and a jigsaw body 72 supported on the upper surface of the jigsaw base 71. The jigsaw base 71 may contact the upper surface of the workpiece W. The jigsaw body 72 may include an electric motor (not shown). The rotation of the drive motor may be transmitted to the cutting blade 73, so that the cutting blade 73 vertically reciprocally moves for cutting the workpiece W. The jigsaw 70 may include a ruler attaching portion 71a for attachiing a parallel ruler (not shown). The ruler attaching portion 71 a may be provided at a front portion (with respect to a cut proceeding direction) of the jigsaw base 71. Therefore, in order to connect the guide device 10 to the jigsaw 70, the reference connection member 31 may be attached to the stationary attaching portion 35 by inserting the first side portion 31a from the left side. Then, the second side portion 31d of the reference connection member 31 may be inserted into the ruler attaching portion 71a of the jigsaw base 71 and may then be fixed to the ruler attaching portion 71a by using a fixing screw or the like. In this way, the adapter base 30 may be connected to the jigsaw 70.

In particular, in this embodiment, the guide projection 21 of the ruler plate 20 is positioned leftward of the central line Ce with respect to the width direction, and the adapter base 30 is placed on the ruler plate 20 so as to be movable along the left edge of the ruler plate 20. Therefore, in the case that the jigsaw 70 has a relatively small size and may tend to cause displacement during the operation, connecting the jigsaw 70 to the left side of the adapter base 30 enables the cutting blade 73 of the jigsaw 70 to cut the workpiece W at a position nearer to the adapter base 30. In this way, the jigsaw 70 having a relatively small size can cut the workpiece W while the jigsaw 70 is held in stable without causing substantial displacement.

As described above, with the guide device 10 of this embodiment, the adapter base 30 may be connected to the base 51 of the cutting tool 50 via two reference connection members 31, and the cutting tool 50 may be supported on the ruler plate 20 via the adapter base 30.

The guide device 10 may be configured to connect the adapter base 30 to the base 51 of the cutting tool 50 by utilizing the ruler attaching portions 67 and 68 provided at the base 51. Cutting tools of different specifications or sizes may have different values for the distance between the ruler attaching portions 67 and 68. In the case of the guide device 10 of this embodiment, the first, second and third attaching portions 34, 36 and 37 are provided as front side attaching portions for the reference connection member 31 or the auxiliary connection member 43. Therefore, the connection member 31 or 43 may be attached to one of the first to third attaching portions 34, 36 and 37, which is suitable for the cutting tool 50 to be used. In this way, the guide device 10 can be used for three different cutting tools that are different in the distance in the forward and rearward direction between the ruler attaching portions 67 and 68.

In addition, the attaching position of the connection member 31 or 43 to the first to third attaching portions 34, 36 and 37 and the stationary attaching portion 35 can be changed with respect to the left and right direction. Therefore, it is possible to change the distance between the adapter base 30 and the saw blade 53 of the cutting tool 50 with respect to the left and right direction. If the cutting position C of the saw blade 53 into the workpiece W changes with change of the laterally tilt angle of the tool unit 52 of the cutting tool 50, the saw blade 53 can still cut the workpiece W at the same cutting position C by suitably adjusting the attaching positions of the connection members 31 or 43 with respect to the left and right direction. In this way, it is possible to easily perform an inclined cutting operation without causing interference of the saw blade 53 with the ruler plate 20.

Further, the second attaching portion 36 and the third attaching portion 37 have respective restriction projections 36c and 37c, which are positioned differently from each other. Therefore, the auxiliary connection member 43 can be attached to the second attaching portion 36 and the third attaching portion 37 only in the case that the auxiliary connection member 43 is properly oriented (the first attaching orientation for the second attaching portion 36, and the second attaching orientation for the third attaching portion 37). Therefore, it is possible to prevent the auxiliary connection member 43 from being attached in an improper orientation to the adapter base 43. Hence, the guide device 10 can be rapidly reliably connected to the cutting tool 50. As a result, it is possible to improve the operability of the guide device 10.

Furthermore, in this embodiment, the auxiliary connection member 43 may be reversed for attaching to the second attaching portion 36 and the third attaching portion 37. Therefore, the auxiliary connection member 43 may serve as two different auxiliary members for attaching to different attaching portions. In this way, the number of parts of the guide device 10 can be minimized. Hence, it is possible to further improve the operability of the guide device 10.

The above embodiment may be modified in various ways. For example, although three attaching portions, i.e., the first, second and third attaching portions 34, 36 and 37, are provided at the front portion of the adapter base 30 for attaching the connection member 31 or 43 in the above embodiment, it may be possible to provide two or four or more attaching portions.

In addition, although only one stationary attaching portion 35 is provided at the rear portion of the adapter base 30, it may be possible to provide two or more attaching portions at the rear portion. For example, it may be also possible to provide only one attaching portion at the front portion and to provide two or more attaching portions at the rear portion for providing different distances between the front and rear connection members.

Further, it may be possible to configure the front attaching portion and the rear attaching portion such that both or one of them can move in the forward and rearward direction relative to the adapter base 30, so that the distance between the front attaching portion and the rear attaching portion can be adjusted. In this way, same connection members can be used commonly for different power tools having different specifications or sizes.

Furthermore, although the same auxiliary connection member 43 is used for both of the second attaching portion 36 and the third attaching portion 37 by reversing the auxiliary connection member 43 with respect to the longitudinal direction, it may be possible to use two different connection members having relief recesses at different positions from each other. In this way, one of the two different connection members may be used exclusively for the second attaching portion 36, and the other of the two different connection members may be used exclusively for the third attaching portion 37.

Furthermore, in the above embodiment, the restriction projection 36c at the inlet portion 36 of the second attaching portion 36 is positioned at the rear upper corner of the groove, and the restriction projection 37c at the inlet portion 37 of the second attaching portion 37 is positioned at the front upper corner of the groove. Thus, the position of the restriction projection 36c relative to the corresponding groove and the position of the restriction projection 37c relative to the corresponding grove are different from each other. However, the position of the restriction projection 36c relative to the corresponding groove and the position of the restriction projection 37c relative to the corresponding grove may be the same. In such a case, the restriction projections 36c and the restriction projection 37c may have different shapes or sizes. Also with this arrangement, it is possible to prevent improper attaching of the reference connection member or the auxiliary connection member.

Furthermore, although the restriction walls 36d and 37d are respectively formed at the left ends of the second attaching portion 36 and the third attaching portion 37 for preventing the reference connection member 31 and the auxiliary connection member 43 from being attached from the left side, the restriction walls 36d and 37d may be replaced with projections projecting into the grooves of the attaching portions.

Furthermore, although the guide device 10 is configured to enable the jigsaw 70 to be connected on the left side of the adapter base 30 such that the cutting direction of the jigsaw 70 is the rearward direction, it may be possible to connect the jigsaw 70 such that the cutting direction is the forward direction.

Furthermore, although the jigsaw 70 is connected to the adapter base 30 by utilizing the stationary attaching portion 35, it may be possible to utilize the first attaching portion 34. In such a case, the reference connection member 31 or the auxiliary connection member 43 may be attached to the first attaching portion 34 so as to extend leftward from the adapter base 30. Then, the jigsaw 70 may be connected to the reference connection member 31 or the auxiliary connection member 43.

Furthermore, although the portable circular saw (cutting tool 50) and the jigsaw 70 were disclosed as examples of power tools for use with the guide device 10, the guide device 10 may be used for any other power tools, such as a router and a trimmer used for chamfering or grooving workpieces.

## Claims

1. A guide device (10) used for guiding a power tool (50, 70) such that the power tool (50, 70) can move along a substantially straight line in a process proceeding direction relative to a workpiece (W), comprising:
a ruler plate (20) capable of being fixed in position relative to the workpiece (W); and
an adapter base (30) capable of supporting the power tool (50, 70) and movable in the process proceeding direction relative to the ruler plate (20);
a plurality of connection members (31, 43) for connecting the adapter base (30) to the power tool (50, 70);
the plurality of connection members (31, 43) includes a front connection member (31, 43) and a rear connection member (31, 43) positioned on a rear side of the front connection member with respect to the process proceeding direction, the connection members are detachably attached to the adapter base (30); and
a distance changing means for changing a distance between the front connection member and the rear connection member; **characterised in that**
the front connection member (31, 43) and the rear connection member (31, 43) can be respectively inserted into a front ruler attaching portion (67) and a rear attaching portion (68) that are provided at the power tool (50) for connection with a parallel ruler.

2. The guide device (10) according to claim 1, wherein:
the distance changing means can change the position of at least one of the front connection member (31, 43) and the rear connection member (31, 43) relative to the adapter base (30) in the process proceeding direction and/or in a direction substantially perpendicular to the process proceeding direction.

3. The guide device (10) according to claim 1 or 2, wherein:
the distance changing means comprises a plurality of attaching portions (34, 35, 36, 37) provided at the adapter base (30).

4. The guide device (10) according to claim 3, wherein:
the distance changing means comprises at least three attaching portions (34, 35, 36, 37) spaced from each other in the process proceeding direction, and
the front connection member (31, 43) and the rear connection member (31, 43) are attached to any two of the at least three attaching portions.

5. The guide device (10) according to claim 3 or 4, wherein:
at least two different types of connection members (31, 43) for use with different types of power tools (50, 70) are provided as the plurality of connection members (31, 43); and
a plurality of different types of attaching portions (36, 37) each configured to be attachable to only corresponding one of the at least two different types of connection members (43) are provided as the plurality of attaching portions.

6. The guide device (10) according to claim 5, wherein:
the plurality of different types of attaching portions includes a first attaching portion (36) and a second attaching portion (37);
one of the at least two different types of connection members (43) configured to be attachable to only the first attaching portion can be changed to the other one of the at least two different types of connection members by reversing the orientation with respect to the longitudinal direction.

7. The guide device (10) according to claim 6, wherein:
the first attaching portion (36) includes a first restriction portion (36c) configured to allow attachment of one of the at least two different types of connection members (43) but prevent attachment of the same connection member when the orientation is reversed with respect to the longitudinal direction; and
the second attaching portion (37) includes a second restriction portion (36c) configured to prevent attachment of one of the at least two different types of connection members (43) attachable to the first attaching portion (36) but allow attachment of the same connection member when the orientation is reversed with respect to the longitudinal direction.

8. The guide device (10) according to claim 4, wherein:
the at least three attaching portions include:
a front attaching portion (34) configured to be able to attach the front connection member (31, 43);
a rear attaching portion (35) configured to be able to attach the rear connection member (31, 43); and
at least one additional attaching portion (36, 37) positioned between the front attaching portion (34) and the rear attaching portion (35);
wherein the front connection member or the rear connection member can be attached to the at least one additional attaching portion.

9. The guide device (10) according to claim 8, wherein;
the plurality of connection members includes a reference connection member (31) and an auxiliary connection member (43) each capable of being used as the front connection member or the rear connection member;
the reference connection member (31) can be attached to both of the front attaching portion (34) and the rear attaching portion (35) but cannot be attached to the at least one additional attaching portion (36, 37); and
the auxiliary connection member (43) can be attached to any of the front attaching portion, the rear attaching portion and the at least one additional attaching portion.

10. The guide device (10) according to claim 9, wherein the at least one additional attaching portion includes a first additional attaching portion (36) and a second additional attaching portion (37).

11. The guide device (10) according to claim 10, wherein:
the auxiliary connection member includes a first auxiliary connection member (43) and a second auxiliary connection member (43),
the first auxiliary connection member can be attached to the first additional attaching portion (36) but cannot be attached to the second auxiliary attaching portion (37); and
the second auxiliary connection member can be attached to the second additional attaching portion (37) but cannot be attached to the first auxiliary attaching portion (36).

12. The guide device (10) according to any one of the preceding claims, further comprising a shifting movement preventing device (40) for preventing the adapter base (30) from shifting in the direction relative to the ruler plate (20) in the direction perpendicular to the process proceeding direction.

13. The guide device (10) according to any one of the preceding claims, wherein the power tool is a portable circular saw (50) or a jigsaw (70).

## Patentansprüche

1. Führungsvorrichtung (10), die zum Führen eines Kraftwerkzeuges (50, 70) verwendet wird, so dass das Kraftwerkzeug (50, 70) sich entlang einer im Wesentlichen geraden Linie in einer Verarbeitungsrichtung relativ zu einem Werkstück (W) bewegen kann, mit
einer Linealplatte (20), die in Position relativ zu dem Werkstück (W) fixiert werden kann, und
einer Adapterbasis (30), die das Kraftwerkzeug (50, 70) lagern kann und in der Verarbeitungsrichtung relativ zu der Linealplatte (20) bewegbar ist,
einer Mehrzahl von Verbindungsbauteilen (31, 43) zum Verbinden der Adapterbasis (30) an das Kraftwerkzeug (50, 70),
bei der die Mehrzahl der Verbindungsbauteile (31, 43) ein vorderes Verbindungsbauteil (31, 43) und ein hinteres Verbindungsbauteil (31, 43) enthält, das an einer hinteren Seite des vorderen Verbindungsbauteils in Bezug auf die Verarbeitungsrichtung positioniert ist, und die Verbindungsbauteile lösbar an die Adapterbasis (30) angebracht sind, und
einem Abstandsänderungsmittel zum Ändern eines Abstandes zwischen dem vorderen Verbindungsbauteil und dem hinteren Verbindungsbauteil, **dadurch gekennzeichnet, dass**
das vordere Verbindungsbauteil (31, 43) und das hintere Verbindungsbauteil (31, 43) in einen vorderen Linealbefestigungsteil (67) bzw. einen hinteren Befestigungsteil (68), die an dem Kraftwerkzeug (50) zum Verbinden mit einem parallelen Lineal vorgesehen sind, eingeführt werden können.

2. Führungsvorrichtung (10) nach Anspruch 1, bei der
das Abstandsänderungsmittel die Position von zumindest einem von dem vorderen Verbindungsbauteil (31, 43) und dem hinteren Verbindungsbauteil (31,43) relativ zu der Adapterbasis (30) in der Verarbeitungsrichtung und/oder in einer Richtung im Wesentlichen senkrecht zu der Verarbeitungsrichtung ändern kann.

3. Führungsvorrichtung (10) nach Anspruch 1 oder 2, bei der
das Abstandsänderungsmittel eine Mehrzahl von Befestigungsteilen (34, 35, 36, 37) aufweist, die an der Adapterbasis (30) vorgesehen ist.

4. Führungsvorrichtung (10) nach Anspruch 3, bei der
das Abstandsänderungsmittel zumindest drei Befestigungsteile (34, 35, 36, 37) aufweist, die voneinander in der Verarbeitungsrichtung beabstandet sind, und
das vordere Verbindungsbauteil (31, 43) und das hintere Verbindungsbauteil (31, 43) an zwei beliebigen von den zumindest drei Befestigungsteilen angebracht sind.

5. Führungsvorrichtung (10) nach Anspruch 3 oder 4, bei der
zumindest zwei unterschiedliche Arten von Verbindungsbauteilen (31, 43) zur Verwendung mit unterschiedlichen Arten von Kraftwerkzeugen (50, 70) als die Mehrzahl von Verbindungsbauteilen (31, 43) vorgesehen sind, und
eine Mehrzahl von unterschiedlichen Arten von Befestigungsteilen (36, 37), von denen jeder so konfiguriert ist, dass er nur an entsprechend eines von den zumindest zwei unterschiedlichen Arten von Verbindungsbauteilen (43) anbringbar ist, als die Mehrzahl von Befestigungsteilen vorgesehen ist.

6. Führungsvorrichtung (10) nach Anspruch 5, bei der
die Mehrzahl von unterschiedlichen Arten von Befestigungsteilen einen ersten Befestigungsteil (36) und einen zweiten Befestigungsteil (37) enthält,
einer von den zumindest zwei unterschiedlichen Arten von Verbindungsbauteilen (43), der so konfiguriert ist, dass er nur an den ersten Befestigungsteil anbringbar ist, mit dem anderen von den zumindest zwei unterschiedlichen Arten von Verbindungsbauteilen durch Reversieren seiner Orientierung in Bezug auf die Längsrichtung gewechselt werden kann.

7. Führungsvorrichtung (10) nach Anspruch 6, bei der
der erste Befestigungsteil (36) einen ersten Einschränkungsteil (36c), der zum Erlauben der Befestigung von einem von den zumindest zwei unterschiedlichen Arten von Verbindungsbauteilen (43) konfiguriert ist, aber die Befestigung des gleichen Verbindungsbauteils verhindert, wenn die Orientierung in Bezug auf die Längsrichtung reversiert ist, enthält, und
der zweite Befestigungsteil (37) einen zweiten Einschränkungsteil (36c) enthält, der zur Verhinderung der Befestigung von einem der zumindest zwei unterschiedlichen Arten von Verbindungsbauteilen (43) konfiguriert ist, die an den ersten Befestigungsteil (36) anbringbar sind, aber die Befestigung des gleichen Verbindungsbauteils ermöglicht, wenn die Orientierung in Bezug auf die Längsrichtung reversiert ist.

8. Führungsvorrichtung (10) nach Anspruch 4, bei der
die zumindest drei Befestigungsteile enthalten:
einen vorderen Befestigungsteil (34), der so konfiguriert ist, dass er an das vordere Verbindungsbauteil (31, 43) anbringbar ist,
einen hinteren Befestigungsteil (35), der so konfiguriert ist, dass er an das hintere Verbindungsbauteil (31, 43) anbringbar ist, und
zumindest einen zusätzlichen Verbindungsteil (36, 37), der zwischen dem vorderen Verbindungsteil (34) und dem hinteren Verbindungsteil (35) positioniert ist, und
bei der das vordere Verbindungsbauteil oder das hintere Verbindungsbauteil an den zumindest einen zusätzlichen Befestigungsteil angebracht werden kann.

9. Führungsvorrichtung (10) nach Anspruch 8, bei der
die Mehrzahl von Verbindungsbauteilen ein Referenzverbindungsbauteil (31) und ein Zusatzverbindungsbauteil (43) enthält, die beide als das vordere Verbindungsbauteil oder das hintere Verbindungsbauteil verwendet werden können,
das Referenzverbindungsbauteil (3 1) kann sowohl an den vorderen Befestigungsteil (34) als auch an den hinteren Befestigungsteil (35) angebracht werden, aber kann nicht an den zumindest einen zusätzlichen Verbindungsteil (36, 37) angebracht werden, und
das Zusatzverbindungsbauteil (43) kann an jeden von dem vorderen Befestigungsteil, dem hinteren Befestigungsteil und dem zumindest einen zusätzlichen Befestigungsteil angebracht werden.

10. Führungsvorrichtung (10) nach Anspruch 9, bei der der zumindest eine zusätzliche Befestigungsteil einen ersten zusätzlichen Befestigungsteil (36) und einen zweiten zusätzlichen Befestigungsteil (37) enthält.

11. Führungsvorrichtung (10) nach Anspruch 10, bei der
das Zusatzverbindungsbauteil ein erstes Zusatzverbindungsbauteil (43) und ein zweites Zusatzverbindungsbauteil (43) enthält,
das erste Zusatzverbindungsbauteil an den ersten zusätzlichen Befestigungsteil (36) angebracht werden kann, aber nicht an den zweiten zusätzlichen Befestigungsteil (37) angebracht werden kann, und
das zweite Zusatzverbindungsbauteil an den zweiten zusätzlichen Befestigungsteil (37) angebracht werden kann, aber nicht an den ersten zusätzlichen Befestigungsteil (36) angebracht werden kann.

12. Führungsvorrichtung (10) nach einem der vorherigen Ansprüche, die weiter eine Verlagerungsbewegungsverhinderungsvorrichtung (40) zum Verhindern, dass die Adapterbasis (30) sich in der Richtung relativ zu der Linealplatte (20) in der Richtung senkrecht zu der Verarbeitungsrichtung verlagert, aufweist.

13. Führungsvorrichtung (10) nach einem der vorherigen Ansprüche, bei der das Kraftwerkzeug eine tragbare Kreissäge (50) oder eine Stichsäge (70) ist.

## Revendications

1. Dispositif de guidage (10) utilisé pour guider un outil de puissance (50, 70) de sorte que l'outil de puissance (50, 70) peut se mouvoir le long d'une ligne substantiellement droite dans une direction de progression du processus par rapport à une pièce d'usinage (W), comprenant :
une plaque de règle (20) capable d'être fixée dans une position par rapport à la pièce d'usinage (W) ; et
une base d'adaptateur (30) capable de supporter l'outil de puissance (50, 70) et déplaçable dans une direction de progression du processus par rapport à la plaque de règle (20) ;
une pluralité de membres de connexion (31, 43) pour connecter la base d'adaptateur (30) à l'outil de puissance (50, 70) ;
la pluralité des membres de connexion (31, 43) inclut un membre de connexion frontale (31, 43) et un membre de connexion arrière (31, 43) positionné sur un côté arrière du membre de connexion frontale par rapport à la direction de progression du processus, les membres de connexion sont attaché de manière amovible à la base d'adaptateur (30) ; et
un moyen de modification de distance pour modifier une distance entre le membre de connexion frontale et le membre de connexion arrière ;
**caractérisé en ce que**
le membre de connexion frontale (31, 43) et le membre de connexion arrière (31, 43) peuvent être respectivement insérés dans une partie de fixation (67) d'une règle frontale et une partie de fixation (68) arrière qui sont disposées sur l'outil de puissance (50) pour connexion avec une règle parallèle.

2. Dispositif de guidage (10) selon la revendication 1, dans lequel :
le moyen de modification de distance peut modifier la position d'au moins un des membres de connexion frontale (31, 43) et membre de connexion arrière (31, 43) par rapport à la base d'adaptateur (30) dans la direction de progression du processus et/ou dans une direction substantiellement perpendiculaire à la direction de progression du processus.

3. Dispositif de guidage (10) selon la revendication 1 ou 2, dans lequel :
le moyen de modification de distance comprend une pluralité de parties de fixation (34, 35, 36, 37) disposées sur la base d'adaptateur (30).

4. Dispositif de guidage (10) selon la revendication 3, dans lequel :
le moyen de modification de distance comprend au moins trois parties de fixation (34, 35, 36, 37) espacées l'une de l'autre dans la direction de progression du processus, et le membre de connexion frontale (31, 43) et le membre de connexion arrière (31, 43) sont attachés à les unes ou les autres de deux des au moins trois parties de fixation.

5. Dispositif de guidage (10) selon la revendication 3 ou 4, dans lequel :
Au moins deux différents types de membres de connexion (31, 43) pour utilisation avec différents types d'outils de puissance (50, 70) sont fournis comme étant la pluralité de membres de connexion (31, 43) ; et
une pluralité de différents types de parties de fixation (36, 37) chacune configurée pour être attachée à seulement un des au moins deux différents types de membres de connexion (43) correspondant sont fournis comme la pluralité des parties de fixation.

6. Dispositif de guidage (10) selon la revendication 5, dans lequel :
la pluralité des différents types de parties de fixation inclut une première partie de fixation (36) et une deuxième partie de fixation (37) ;
une des au moins deux différents types de membres de connexion (43) configuré pour être attaché à seulement la première partie de fixation peut être remplacé par l'autre des au moins deux différents types de membres de connexion en reversant l'orientation par rapport à la direction longitudinale.

7. Dispositif de guidage (10) selon la revendication 6, dans lequel :
la première partie de fixation (36) inclut une première partie de restriction (36c) configurée pour permettre la fixation d'un des au moins deux différents types de membres de connexion (43) mais empêche la fixation du même membre de connexion lorsque l'orientation est renversée par rapport à la direction longitudinale ; et
la deuxième partie de fixation (37) inclut une deuxième partie de restriction (36c) configurée pour empêcher la fixation d'un des au moins deux différents types de membres de connexion (43) pouvant être fixés à la première porte de fixation (36) mais permettre la fixation du même membre de connexion lorsque l'orientation est renversée par rapport à la direction longitudinale.

8. Dispositif de guidage (10) selon la revendication 4, dans lequel :
les au moins trois parties de fixation incluent :
une partie de fixation frontale (34) configurée pour être capable de fixer le membre de connexion frontale (31, 43) ;
une partie de fixation arrière (35) configurée pour être capable de fixer le membre de connexion arrière (31, 43) ; et
au moins une partie de fixation additionnelle (36, 37) positionnée entre la partie de fixation frontale (34) et la partie de fixation arrière (35) ;
dans lequel le membre de connexion frontale ou le membre de connexion arrière peut être attaché à la au moins une partie de fixation additionnelle.

9. Dispositif de guidage (10) selon la revendication 8, dans lequel :
la pluralité de membres de connexion inclut un membre de connexion de référence (31) et un membre de connexion auxiliaire (43), chacun capable d'être utilisé comme le membre de connexion frontale ou le membre de connexion arrière ;
le membre de connexion de référence (31) peut être attaché tant à la partie de fixation frontale (34) qu'à la partie de fixation arrière (35) mais ne peut être attaché à la au moins une partie de fixation additionnelle (36, 37) ; et
le membre de connexion auxiliaire (43) peut être attaché à n'importe laquelle de la partie de fixation frontale, la partie de fixation arrière et la au moins une partie de fixation additionnelle.

10. Dispositif de guidage (10) selon la revendication 9, dans lequel la au moins une partie de fixation additionnelle inclut une première partie de fixation additionnelle (36) et une deuxième partie de fixation additionnelle (37).

11. Dispositif de guidage (10) selon la revendication 10, dans lequel :
le membre de connexion auxiliaire inclut un premier membre de connexion auxiliaire (43) et un deuxième membre de connexion auxiliaire (43),
le premier membre de connexion auxiliaire peut être attaché à la première partie de fixation additionnelle (36) mais ne peut être attaché à la deuxième partie de fixation additionnelle (37) ; et
le deuxième membre de connexion auxiliaire peut être attaché à la deuxième partie de fixation additionnelle (37) mais ne peut être attaché à la première partie de fixation additionnelle (36).

12. Dispositif de guidage (10) selon l'une quelconque des revendications précédentes, comprenant en outre un dispositif (40) antimouvement de déplacement pour empêcher la base d'adaptateur (30) de se déplacer en direction par rapport à la plaque de règle (20), dans la direction perpendiculaire à la direction de progression du processus.

13. Dispositif de guidage (10) selon l'une quelconque des revendications précédentes, dans lequel l'outil de puissance est -une scie circulaire portable (50) ou une scie sauteuse (70).
